## Europäisches Patentamt

## European Patent Office

## Office européen des brevets

(19)

(11) Veröffentlichungsnummer: **0 016 322**
**B1**

(12) # EUROPÄISCHE PATENTSCHRIFT

(45) Veröffentlichungstag der Patentschrift:
**30.12.81**

(51) Int. Cl.³: **F 16 G 13/06, B 24 C 3/26**

(21) Anmeldenummer: **80100530.7**

(22) Anmeldetag: **02.02.80**

(54) **Band für eine Muldenband-Reinigungsvorrichtung.**

(30) Priorität: **14.03.79 DE 2909893**

(43) Veröffentlichungstag der Anmeldung:
**01.10.80 Patentblatt 80/20**

(45) Bekanntmachung des Hinweises auf die Patenterteilung:
**30.12.81 Patentblatt 81/52**

(84) Benannte Vertragsstaaten:
**CH FR GB IT NL SE**

(56) Entgegenhaltungen:
**DE-C-140 773**
**FR-A-2 174 613**
**FR-A-2 255 820**
**US-A-1 490 515**
**GB-A-664 998**
**US-A-2 737 755**

(73) Patentinhaber: **SCHLICK-roto-jet Maschinenbau GmbH, Industriestrasse 2, D-4431 Metelen (DE)**

(72) Erfinder: **Kavcic, Marjan, Dipl.-Ing., Vitskirchhof, D-4431 Metelen (DE)**

(74) Vertreter: **Schulze Horn, Stefan et al, Patentanwälte Dipl.-Ing. Stefan Schulze Horn M. SC. Dr. Helmut Hoffmeister Goldstrasse 36, D-4400 Münster (DE)**

## Band für eine Muldenband-Reinigungsvorrichtung

Die Erfindung betrifft ein Band für eine Muldenband-Reinigungsvorrichtung, in welcher die zu reinigenden Gegenstände in der Mulde eines umlaufenden endlosen Bandes umgewälzt und während des Umwälzens mit einem Strahlmittel beaufschlagt und gereinigt werden, wobei das endlose Band aus Querstäben besteht, zwischen denen Glieder verlaufen und wobei die Enden der Querstäbe von Ketten getragen werden.

Bänder für Muldenband-Reinigungsvorrichtungen bestehen meist aus Gummi mit Perforationen darin zum Durchtritt des Strahlmittels in entsprechende Sammlungsräume der Vorrichtung. Nachteilig ist bei diesen Bändern aber, dass sie praktisch nicht repariert werden können und damit ein Austausch auch schon bei relativ geringfügigen Beschädigungen notwendig ist. Die entsprechende Vorrichtung muss dann für Stunden oder sogar für Tage ausser Betrieb gesetzt werden und neben dem hohen Aufwand für ein neues Band sind auch die Beistellungskosten für eine Ersatzmaschine sowie die Kosten für das bei der Reparatur eingesetzte Personal erheblich.

Es ist weiterhin bekannt, Bänder für Muldenband-Reinigungsvorrichtungen aus einzelnen Gliedern aus Stahlblech oder Gussteilen herzustellen. Nachteilig ist hierbei aber, dass zu reinigende Gegenstände, Teile derselben oder Strahlmittel insbesondere bei Umlenkungsstellen des Bandes zwischen die einzelnen Glieder geraten können und dass dann diese bei ihrem Zusammenschieben für den Geradlauf ebenfalls leicht beschädigt werden können, falls nicht die Antriebs- und Führungselemente eine Beschädigung erfahren. Auch bei diesen Bändern ist darüber hinaus das Auswechseln einzelner Glieder oder des gesamten Bandes aufwendig und mit den vorstehend genannten Kosten behaftet, insbesondere da das gesamte Band für den Ersatz eines Gliedes an diesem geteilt und nach erfolgter Reparatur wieder zusammengefügt und gespannt werden muss. Darüber hinaus sind diese Bänder von hohem Gewicht und können nur aufwendig hergestellt werden.

Durch die US-PS 2 447 802 ist eine Muldenband-Reinigungsvorrichtung bekannt, bei der die Glieder tragende Querstäbe an ihren Enden von Ketten getragen werden. Da aber auch bei dieser bekannten Vorrichtung die Glieder fest an den Querstäben angebracht sind, muss zum Auswechseln eines oder mehrerer Glieder das Muldenband geteilt werden, d.h. mindestens zwei Querstäbe müssen dazu von dem Muldenband entfernt werden.

Es ist daher Aufgabe der Erfindung, Bänder für Muldenband-Reinigungsvorrichtungen zu schaffen, welche die vorgenannten Nachteile nicht mehr aufweisen und die insbesondere nicht nur wirtschaftlich herstellbar sind, den Betrieb der Anlagen nicht stören, also reparaturunanfällig sind, als auch insbesondere ein Auswechseln beschädigter Teile durch einfache Handgriffe ohne Werkzeug und ohne eine Teilung mit der dazugehörigen Wiederzusammenfügung des Bandes ermöglichen. Die einzelnen Glieder des erfindungsgemässen Bandes sollen also ohne das Herausziehen von Querstäben und ohne das Auswechseln des gesamten Bandes ersetzbar sein.

Diese Aufgabe wird erfindungsgemäss dadurch gelöst, dass die Glieder zumindest an ihren Enden aus elastischem Material bestehen und dass die Enden ein Auswechseln eines Gliedes ohne das Herausziehen eines Stabes ermöglichend beidseitig je nicht geschlossene Endösen zur Aufnahme der Querstäbe aufweisen, die den Querstab ganz oder Teilweise umschlingen und wobei die Ösenränder auf die Breite eines Querstabes rückfedernd aufbiegbar sind.

Die Bandglieder sind also gegenüber den Querstäben selbstklemmend, ohne dass dadurch ihre Beweglichkeit gegenüber den Stäben beeinträchtigt wäre und sie bestehen vorteilhaft aus Gummi oder elastischem Kunststoff mit oder ohne elastischen metallischen Einlagen.

In einer weiteren Ausgestaltung der Erfindung können sie aber auch aus Federstahl bestehen und ihr Umschlingungswinkel ist dann zur Vereinfachung ihrer Montage und Demontage nicht wesentlich grösser als 180°. Bei der Verwendung von Gummi oder Kunststoff kann der Umschlingungswinkel vorteilhaft bis zu 270° oder mehr betragen.

Die Ränder der Ösen sind je nach Einsatz der die Bänder benutzenden Vorrichtungen entweder für eine besonders leichte Montage oder eine besonders hohe Haltekraft ausgebildet, sie können also sich nach aussen hin öffnende Keilräume bilden (bessere Zusammensetzbarkeit) oder zur Erhöhung der Haltekraft an dem beim montierten Band innen liegenden Rand eine Spitze ausbilden, deren Innenseite sich parallel zur Aussenfläche des Bandgliedes erstreckt.

Die Enden der Querstäbe bilden die Bolzen von die Bänder seitlich begrenzenden Ketten, die mittels Zahnräder oder Scheiben in bekannter Weise gespannt und geführt werden, wobei vorteilhaft zur Verringerung der Abmessungen der Ketten die Enden der Querstäbe einen geringeren Durchmesser aufweisen, als die Stäbe in dem Bereich, in dem die Bandglieder aufgesetzt sind. Durch den dabei erhältlichen grösseren Umfang der Querstäbe im Bereich der eigentlichen Tragglieder wird die Durchbiegung der Stäbe verringert und die Haltekraft der aufgesetzten Bandglieder erhöht.

Im folgenden wird ein Ausführungsbeispiel der Erfindung anhand von Zeichnungen näher erläutert. Es zeigen:

Figur 1 schematisch ein Band gemäss der Erfindung im Bereich der oberen Umlenkung,

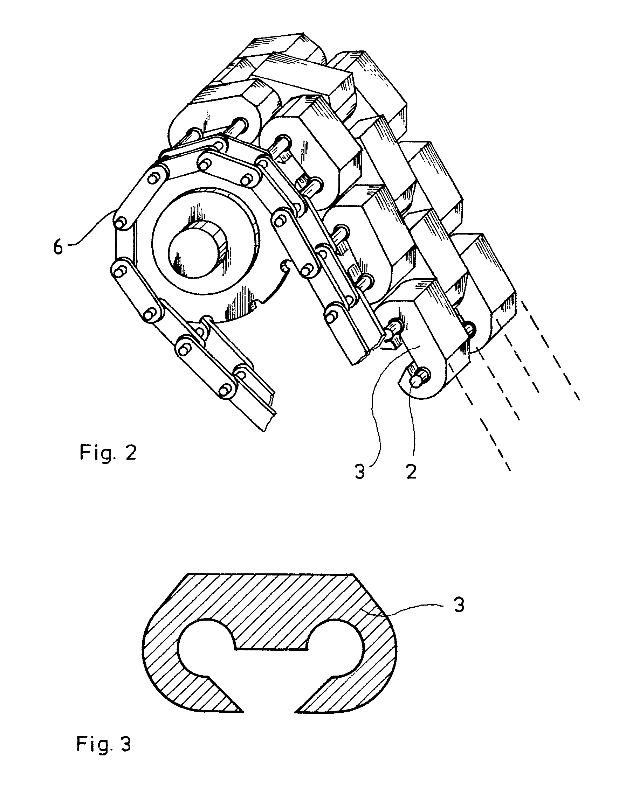

Figur 2 die Aufsicht auf einen Ausschnitt eines erfindungsgemässen Bandes mit einer Seitenbegrenzungskette und

Figur 3 die Seitenansicht eines Bandgliedes mit alternativer Ausgestaltung des Schlitzes zum Einführen der Querstäbe.

Gemäss den Figuren besteht das erfindungsgemässe Band 1 für Muldenband-Reinigungsvorrichtungen bzw. für Muldenband-Strahlanlagen
aus einzelnen Bandgliedern 3, die jeweils parallel
zueinander verlaufende Querstäbe 2 miteinander
verbinden. Die Querstäbe 2 weisen einen Abstand
voneinander auf, die dem Abstand der Endösen
der Bandglieder 3 entspricht und in Längsrichtung
der Querstäbe 2 sind zwischen den Bandgliedern
3 Abstände vorhanden, die der Breite eines Gliedes 3 entsprechen, so dass jeweils die vorlaufende Reihe von Gliedern auf dem nachlaufenden
Querstab in den Zwischenräumen zwischen den
Gliedern der nachlaufenden Gliederreihe liegt.

Die Querstäbe 2 enden aussen, d.h. beidseitig
des eigentlichen Bandbereiches in Ketten 6, wobei
sie die die Kettenglieder verbindenden Bolzen bilden. In diesem Bereich ist ihr Durchmesser geringer, als in dem Bereich, in welchem die Bandglieder 3 aufgesetzt sind. Die beidseitigen Ketten 6
werden in bekannter Weise mittels Zahnräder
oder Scheiben gespannt, geführt und angetrieben. Dieser Bestandteil der Bänder liegt weiterhin
im Belieben des Fachmannes und braucht daher
nicht weiter beschrieben zu werden.

Die Bandglieder 3 selbst weisen je zwei Endösen auf, in denen die Querstäbe 2 verlaufen und
die Endösen sind derart ausgebildet, dass in sie
ohne weiteres Zutun auch bei montiertem Band
die Querstäbe eingeklemmt werden können. Beschädigte Bandglieder können also entfernt und
ein neues Glied kann dann ohne Werkzeug durch
einfache Handgriffe aufgeklemmt werden. Hierzu
bietet sich beispielsweise der Bereich der vorderen Umlenkung an, welcher für das Reparaturpersonal besonders einfach zugänglich ist.

Es ist jetzt Wesen der Erfindung, die einzelnen
Bandglieder zumindest im Bereich ihrer Endösen
aus elastischem Material auszubilden und sie aufklemmbar zu gestalten, wobei die Umschlingung
und Klemmkraft gross genug sein muss, um auch
den erheblichen Beanspruchungen im Betrieb gewachsen zu sein, andererseits aber das einfache
Einsetzen zu ermöglichen.

Die Bandglieder sind gemäss dem Ausführungsbeispiel einstückig und bestehen aus Gummi, es kann aber auch Kunststoff oder Federstahl
verwendet werden und es können die genannten
Materialien miteinander kombiniert werden. Die
Endösen weisen einen Schlitz zur radialen Einführung der Querstäbe auf, wobei die Ösenränder 4,5
so weit rückfedernd aufbiegbar sind, dass die
Querstäbe hindurchgelangen können. Der Umschlingungswinkel der Glieder gegenüber jedem
Querstab beträgt mindestens 180 °, es können
aber auch 280 ° oder mehr verwendet werden.

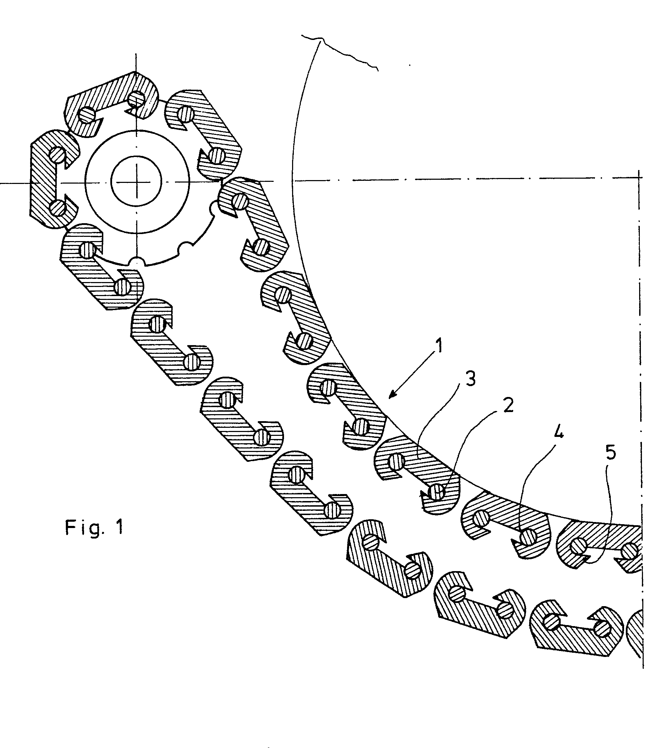

Gemäss Figur 1 verlaufen die Spitzen der beim
montierten Band innen liegenden Ränder der
Ösen parallel zur Aussenfläche der Bandglieder.
Hierdurch wird eine besonders grosse Haltekraft
erreicht. Falls aber eine einfache Aufklemmung
der Bandglieder im Vordergrund steht, können die
Spitzen auch einen zum eingesetzten Querstab hin zusammenlaufenden Keilraum bilden (Figur 3).
Die Enden der innen parallel zur Aussenfläche
verlaufenden Fläche sind dabei querstabseitig
leicht angefasst.

Es ist für den Fachmann absolut überraschend
dass erfindungsgemässe Bandglieder auch bei
höchsten Beanspruchungen, z.B. bei Gewichten
von 1 t und mehr zuverlässig arbeiten, ohne dass
ihre Handhabbarkeit bei der Anfangsmontage und
bei Reparaturen beeinträchtigt ist und angesichts
der Vorteile des Erfindungsgegenstandes kann
daher von eine idealen Lösung der anstehenden
Probleme gesprochen werden.

**Patentansprüche**

1. Band für eine Muldenband-Reinigungsvorrichtung, in welcher die zu reinigenden Gegenstände in der Mulde eines umlaufenden endlosen
Bandes umgewälzt und während des Umwälzens
mit einem Strahlmittel beaufschlagt und gereinigt
werden, wobei das endlose Band aus Querstäben
(2) besteht, zwischen denen Glieder (3) verlaufen
und wobei die Enden der Querstäbe von Ketten (6)
getragen werden, dadurch gekennzeichnet, dass
die Glieder (3) zumindest an den Enden aus elastischem Material bestehen und dass die Enden ein
Auswechseln eines Gliedes (3) ohne das Herausziehen eines Stabes (2) ermöglichend beidseitig je
nicht geschlossene Endösen zur Aufnahme der
Querstäbe (2) aufweisen, die den Querstab ganz
oder teilweise umschlingen und wobei die Ösenränder (4, 5) auf die Breite eines Querstabes rückfedernd aufbiegbar sind.

2. Band nach Anspruch 1, dadurch gekennzeichnet, dass der Ösenumschlingungswinkel mehr als
180 ° und bis zu 270 ° beträgt.

3. Band nach Anspruch 1 oder 2, dadurch gekennzeichnet, dass die Bandglieder (3) aus Gummi oder elastischem Kunststoff mit oder ohne
elastischen metallischen Einlagen bestehen.

4. Band nach Anspruch 1 oder 2, dadurch gekennzeichnet, dass mindestens die Ösen aus Federstahl bestehen und ihr Umschlingungswinkel
nicht wesentlich über 180 ° liegt.

5. Band nach einem der Ansprüche 1 bis 4,
dadurch gekennzeichnet, dass die Ränder der
Ösen derart abgeschrägt sind, dass sie zwischen
sich einen zum eingesetzten Querstab hin zusammenlaufenden Keilraum bilden.

6. Band nach einem der Ansprüche 1 bis 4,
dadurch gekennzeichnet, dass die beim montierten Band innen liegenden Ränder (5) der Ösen
Spitzen ausbilden, deren Innenseiten parallel zu
den Aussenflächen der Bandglieder verlaufen.

7. Band nach Anspruch 1 bis 6, dadurch gekennzeichnet, dass die beim montierten Band innen
liegenden Ösenränder (5) eines Gliedes (3) voneinander einen Abstand aufweisen, der grösser ist
als der Durchmesser eines Querstabes (2).

8. Band nach Anspruch 1 bis 7, dadurch gekennzeichnet, dass die Enden der Querstäbe (2) die
Bolzen von Ketten (6) bilden, die mittels Zahnräder oder Scheiben in bekannter Weise gespannt
und geführt werden.

9. Band nach Anspruch 8, dadurch gekennzeichnet, dass die Enden der Querstäbe (2) einen geringeren Durchmesser aufweisen, als die Stäbe (2) in dem Bereich, in dem die Band-Glieder (3) aufgesetzt sind.

**Revendications**

1. Bande pour dispositif de nettoyage à bande en auge dans lequel les objets à nettoyer sont roulés dans l'auge d'une bande sans fin et soumis, pendant le roulage, à l'action d'un jet de particules et nettoyés, cependant que la bande sans fin est constituée par des tiges transversales (2) entre lesquelles s'étendent des éléments (3), les extrémités des tiges transversales étant portées par des chaînes, caractérisée en ce que les éléments (3) sont formées, au moins à leurs extrémités, d'un matériau élastique et en ce que, pour permettre le remplacement d'un élément (3) sans retrait d'une tige (2), les extrémités comportent sur les deux côtés des œillets ouverts recevant les tiges transversales (2) et entourant la tige transversale entièrement ou partiellement, cependant que les bords (4, 5) des œillets peuvent s'appliquer élastiquement sur la largeur d'une tige transversale.

2. Bande selon la revendication 1, caractérisé en ce que l'angle d'embrassement des œillets est supérieur à 180 ° et au maximum égal à 270 °.

3. Bande selon la revendication 1 ou 2, caractérisée en ce que les éléments (3) de la bande sont formés de caoutchouc ou de matière plastique élastique avec ou sans garnitures métalliques élastiques.

4. Bande selon la revendication 1 ou 2, caractérisée en ce qu'au moins les œillets sont formés d'acier à ressort et en ce que leur angle d'embrassement ne dépasse pas sensiblement la valeur de 180 °.

5. Bande selon une des revendications 1 à 4, caractérisée en ce que les bords des œillets sont biseautés da façon telle qu'ils forment entre eux un intervalle conique dont la largeur décroît en direction de la tige transversale insérée.

6. Bande selon une des revendications 1 à 4, caractérisée en ce que les bords (5) situés à l'intérieur, dans la bande montée, forment des pointes dont les côtés intérieurs sont parallèles aux faces extérieures des éléments de la bande.

7. Bande selon les revendications 1 à 6, caractérisée en ce que les bords (5) d'œillet d'un élément (3) qui sont situés à l'intérieur, dans la bande montée, sont espacés l'un de lautre d'une distance supérieure au diamètre d'une tige transversale (2).

8. Bande selon les revendications 1 à 7, caractérisée en ce que les extrémités des tiges transversales (2) forment les tourillons (8) de chaînes qui sont tendues et guidées de manière connue en soi par des pignons ou des poulies.

9. Bande selon la revendication 8, caractérisée en ce que les extrémités des tiges transverales (2) présentent un diamètre inférieur à celui que présentent les tiges dans la zone dans laquelle les éléments (3) de la bande sont montés.

**Claims**

1. A belt for a trough belt-type cleaning apparatus in which the objects to be cleaned are rolled around in the trough of a rotating endless belt and acted upon by a blasting agent and thereby cleaned while being rolled around, wherein said endless belt comprises transverse bars (2) having links (3) extending therebetween, and wherein the ends of said transverse bars are supported by chains (6), characterized in that said links (3) are formed of an elastic (resilient) material at least at their ends, and that said ends, in order to permit replacement of a link (3) without removal of a bar (2), include on both sides thereof partially open terminal eyes for receiving said transverse bars (2), which eyes embrace said transverse bar fully or partially, and wherein the peripheries (4, 5) of said eyes are adapted to be expanded with spring-back reslience to a dimension corresponding to the width of a transverse bar.

2. The belt according to claim 1, characterized in that the looping angle of said eyes is greater than 180 ° and ranges up to 270 °.

3. The belt according to claim 1 or 2, characterized in that said belt links (3) are formed of rubber material or of resilient plastics material, with or without resilient metallic inserts.

4. The belt according to claim 1 or 2, characterized in that at least the eyes are formed of spring steel, and that their looping angle is not substantially greater than 180 °.

5. The belt according to any one of claims 1 to 4, characterized in that the edges of the eyes are beveled or chamfered in a manner to define between them a wedge-shaped space converging towards the inserted cross bar.

6. The belt according to any one of claims 1 to 4, characterized in that the edges (5) of said eyes which are located on the inner side in the mounted condition of the belt, define corners the inner faces of which extend in parallel with the outer surfaces of the belt links.

7. The belt according to claims 1 to 6, characterized in that the edges (5) of said eyes which are located on the inner side in the mounted condition of the belt, of each link (3) are spaced from each other at a destance exeeding the diameter of a cross bar (2).

8. The belt according to claims 1 to 7, characterized in that the end portions of said cross bars (2) define the pins of chains (6) which are tensioned and guided by sprockets or pulleys, in a manner per se.

9. The belt according to claim 8, characterized in that the end portions of said cross bars (2) are of smaller diameter than those portions of said cross bars to which said belt links (3) are attached.

Fig. 1

Fig. 2

6

3    2

3

Fig. 3